# EUROPEAN PATENT APPLICATION

(11) **EP 3 081 087 A1**
(43) Date of publication of application: **19.10.2016**
(21) Application number: 14868913.6
(22) Date of filing: 09.12.2014
(51) Int. Cl.: A01N 59/16, A01N 25/34, A01N 59/06, A01P 3/00

(54) **ANTIBACTERIAL MEMBER**

(30) Priority: 13.12.2013 JP 2013273793
(71) Applicant: Inoue Office Co., Ltd, Koganei-shi, Tokyo 1840011 (JP)
(72) Inventor: INOUE, Naofumi, Tokyo, 1840011 (JP)
(74) Representative: Gulde & Partner
(86) International application number: PCT/JP2014/082515
(87) International publication number: WO 2015/087860

(57) **Abstract**

An antibacterial member is provided which has no harmful effect on a content therein such as food and a pharmaceutical agent, but exerts sufficient and long-lasting antibacterial effect, and can be manufactured easily at low cost. In particular, provided is an antibacterial member suitable for a container of milk and a box lunch; the antibacterial member is composed of at least one base member and at least one plastic film fixed to said base member, wherein at least one inorganic antibacterial agent is contained in said base member and/or at least one of compositions disposed between said base member and said plastic film, no inorganic antibacterial agent is contained in said plastic film, said base member and said composition do not come in direct contact with a content, and said plastic film comes in direct contact with a content such as food.

## Description

### Technical filed

The present invention relates to an antibacterial member used for a container and the like.

### Background

Various antibacterial means for members of containers preserving milk, seasonings, box lunches, many other foods and pharmaceutical agents have been proposed and implemented. Especially, organic antibacterial agents have been chiefly used. However, conventional antibacterial members have been accompanied by drawbacks such that antibacterial effect is not exerted sufficiently because a property of the antibacterial agent is not suitable and usage of the antibacterial agent is improper, or they have an adverse effect on contents or are even hazardous to human bodies. For example, organic antibacterial agents are volatile so that they not only dissipate while being used resulting in loss of antibacterial effect but are hazardous to human bodies causing sick house syndrome, allergy and health damages, which are undesirable. On the other hand, as to inorganic antibacterial agents, though silver-based antibacterial agents have been used chiefly, they have drawbacks leading to loss of commodity value such that they lose antibacterial effect or change color by tap water containing chlorine, acid rain containing sulfur compounds, urine or the like, or change color by light such as solar light or heat.

If antibacterial effect by an antibacterial member is insufficient, food as the content decays resulting possibly in not only loss of commodity value but also occurrence of health problems. Further, in addition to decay, undesirable change such as generation of abnormal odor and color change may be caused due to growth of mold or bacteria. Accordingly, there has been a need for an antibacterial member which has no adverse effect on food but exerts sufficient antibacterial effect. In particular, an antibacterial member suitable for a container of milk is desired since milk is often fed to infants, who are not sufficiently resistant, and it is preferred to sterilize milk at a low temperature in order to prevent nutritive components from decomposing. Further, as to box lunches, since they are often stored at a high temperature resulting in easy growth of bacteria, and as to precut vegetables, since it is important to preserve their freshness, an antibacterial member suitable for each of them is desired. Moreover, there has been a need for an antibacterial member which is simple, easy to handle, and capable of being brought into contact with food and the like in various ways to exert an antibacterial property.

### Prior art documents

### Patent documents

Patent Document 1: Japanese Unexamined Patent Application Publication No. 2005-075942

### Summary

### Problems to be solved by the invention

An antibacterial member is provided which has no harmful effect on a content therein such as food and a pharmaceutical agent, but exerts sufficient and long-lasting antibacterial performance, and can be manufactured easily at low cost. In particular, provided is an antibacterial member capable of providing an antibacterial property in a form of a container or an additive suitable for milk and a box lunch.

### Means to solve the problem

(1) An antibacterial member composed of at least one base member and at least one plastic film fixed to said base member, wherein at least one inorganic antibacterial agent is contained in said base member and/or at least one of compositions disposed between said base member and said plastic film, no inorganic antibacterial agent is contained in said plastic film, said base member and said composition in which the inorganic antibacterial agent is contained do not come in direct contact with a content, and a film thickness of said plastic film is 4 to 10 µm.
(2) An antibacterial member of claim 1, wherein said inorganic antibacterial agent is an oxide or an hydroxide which contains Zn ion (component 1) and at least one of ions of an alkaline earth metal, aluminum and silicon (component 2).
(3) An antibacterial member of claim 1, wherein said base member is made of paper or plastic.
(4) An antibacterial member of claim 1, wherein said plastic film is made of polyethylene or polypropylene.
(5) An antibacterial member of claim 1, wherein said inorganic antibacterial agent is a solid solution represented by the following formula (1):

   (ZnO)ₓ(Al₂O₃)₁₋ₓ ··· (1)

   wherein x fulfills the condition of 0.5 < x < 0.98.

### Advantageous effect of the invention

An antibacterial member could have been provided which has no harmful effect on a content therein such as food and a pharmaceutical agent, but exerts sufficient and long-lasting antibacterial performance, and can be manufactured easily at low cost. In particular, an antibacterial member could have been provided which is suitable to preserve milk and a box lunch.

### Detailed description of preferred embodiments

An inorganic antibacterial agent of the present invention is preferably an oxide or an hydroxide which contains Zn ion (component 1) and at least one of ions of an alkaline earth metal, aluminum and silicon (component 2). As for the alkaline earth metal, Mg ion and Ca ion are more preferable, and Mg ion is most preferable. Further, an oxide is preferable to a hydroxide. A most preferable inorganic antibacterial agent is represented by the following formula (1). Further, a solid solution is more preferable.

(ZnO)ₓ(Al₂O₃)₁₋ₓ ··· (1)

wherein x fulfills the condition of 0.5 < x < 0.98.

The inorganic antibacterial agent of the present invention is preferably subjected to surface treatment. Agents used suitably for surface treatment include higher fatty acids, anionic surfactants, phosphate esters, coupling agents (silane series, titanate series, aluminum series) and esters of a polyhydroxylic alcohol and a fatty acid, and especially preferred are higher fatty acids having 10 carbon atoms or more such as stearic acid, erucic acid, palmitic acid, lauric acid and behenic acid and alkali metal salts of said higher fatty acids.

Particle size D50% of the inorganic antibacterial agent of the present invention is preferably 0.05 to 20 µm, more preferably 0.05 to 10 µm, and still more preferably 0.05 to 5 µm. Particle size is a value measured by a laser scattering method after dispersing particles with ultrasonic wave for five minutes or more.

BET surface area of an antibacterial agent is an important index. Generally, in order to exert antibacterial effect promptly, very large BET surface area is desirable. However, on the other hand, in order to sustain antibacterial effect, it is necessary to make BET surface area at a certain value or less. Therefore, BET surface area is preferably 1 to 300 m²/g, more preferably 5 to 150 m²/g, and still more preferably 10 to 100 m²/g.

The inorganic antibacterial agents used in the present invention include, but not limited to, the following specific examples. Numbers within the parentheses are BET surface area (m²/g) and particle size D50% (µm) in this order.
(A-1) (ZnO)_{0.96}(Al₂O₃)_{0.04} (30, 0.5)
(A-2) inorganic antibacterial particles of A-1 whose surface is modified with sodium laurate
(A-3) Zn_{0.14}Mg_{0.86}O (28, 0.6)
(A-4) Zn_{0.05}Ca_{0.95}O (30, 0.5)

These were each confirmed to be a solid solution by an X-ray diffraction spectrum.

A film thickness of a plastic film used in the present invention is preferably 0.3 to 50 µm, more preferably 0.5 to 25 µm, and most preferably 4.0 to 10 µm.

A material for the plastic film of the present invention is preferably any one of a natural polymeric material, a recycled polymeric material and a synthetic polymeric material, among which a synthetic polymeric material is more preferable, and any one of a so-called general-purpose resin, an elastomer or engineering plastic is used preferably.

A synthetic polymeric material used for the plastic film of the present invention is preferably so-called resins. Examples of resins include thermoplastic synthetic resins and thermosetting synthetic resins and thermoplastic synthetic resins are more preferable.

A material for the plastic film of the present invention is not particularly limited but preferable materials include an olefinic resin such as polyethylene and polypropylene, polystyrene, an ionomer, polyvinyl alcohol, polyvinyl chloride, polyvinylidene chloride, a fluororesin, polycarbonate, polyester such as polyethylene terephthalate, polyamide, aromatic polyamide and polyimide, among which polyethylene, polypropylene and polyethylene terephthalate are more preferable, and an olefinic resin such as polyethylene and polypropylene is most preferable.

A method for fixing the plastic film of the present invention to a base member of the present invention is not particularly limited and an extrusion lamination method (dry laminate method, wet laminate method), a heat seal method, and a method of bonding by an adhesive (including hotmelt adhesive) can be used.

For the base member of the present invention, paper and plastic can be used. Plastic used for the base member is preferably any one of a natural polymeric material, a recycled polymeric material and a synthetic polymeric material, among which a synthetic polymeric material is more preferable, and any one of a general-purpose resin, an elastomer or engineering plastic is used preferably. Among them, a thermoplastic resin is more preferable. Further, among the thermoplastic resin, preferably used are olefinic resins such as polyethylene and polypropylene, polystyrene, polyvinyl chloride, polyvinylidene chloride, a fluororesin, polycarbonate, polyester such as polyethylene terephthalate, polyamide, aromatic polyamide and polyimide, among which an olefinic resin such as polyethylene and polypropylene, polystyrene and polyethylene terephthalate are more preferable, and polyethylene, polypropylene and polystyrene are most preferable. These may be foam.

Various methods can be employed for providing the inorganic antibacterial agent to the base member. For example, there are methods such as dipping the base member in a dispersion of the inorganic antibacterial agent, applying the inorganic antibacterial agent onto a surface of the base member, and laminating a plastic film bearing the inorganic antibacterial agent on the base member. The effect of the present invention can be obtained by providing the inorganic antibacterial agent not only to the entire surface of the base member but also to a part thereof.

For manufacturing the antibacterial member of the present invention, common known methods can be used. For example, in a case of a lunch box made of a polypropylene resin or a polystyrene resin, a sheet having a thickness of about 0.2 to 1 mm is made from a usual polypropylene resin or a polystyrene resin by the known injection molding method or extrusion molding, and thereafter thermoforming such as pressure forming and vacuum forming is performed to produce the antibacterial member. Vacuum forming is more preferable.

In a case of a milk carton, it is preferable to laminate an olefinic resin such as polyethylene on paper (base member) by the melt extrusion method at an elevated temperature. A milk carton can be manufactured by a common method using the paper laminated with the resin film.

Other members can be manufactured by common methods. That is, they can be formed by folding, pasting and shaping a plate-like base material, and also by pressing a template onto a plate-like base material for shaping.

The antibacterial member of the present invention can be used for containers of various shapes such as a milk carton, a lunch box, a container of food or a pharmaceutical agent, and a preservation bag or container for a plant such as a garden plant. Further, by including the antibacterial member of the present invention in a content such as food, an antibacterial property can be given. In this case, it is preferable that surfaces coming in contact with the content such as food are all covered with a plastic film that does not contain any antibacterial agent.

### Examples

### (Example 1)

### <Preparation of aqueous dispersion of inorganic antibacterial agent A-1: Dispersion Y-1>

A vessel (500 mL) was loaded with 300 mL of purified water, to which 2.5 g of sodium laurate, which is a carboxylic acid-type anionic surfactant, was added, and further, 90 g of inorganic antibacterial agent A-1 and 200 g of balls having a diameter of 1 mm made of alumina were added, thereafter, the vessel was placed on a rotary roller, and rotatory dispersion processing was performed for 48 hours according to a usual method of a ball mill, to prepare an aqueous dispersion of inorganic antibacterial agent A-1 (dispersion Y-1).

### (Example 2)

### <Preparation of antibacterial member-1 - Base member is paper>

A piece of paperboard having a basis weight of 300 g/m² was impregnated with an aqueous dispersion Y-1 containing the inorganic antibacterial agent A-1 to yield paperboard containing A-1 at 0.2 g/m². A polyethylene film with a thickness of 4 µm was laminated on the paperboard by an extrusion laminating method using a T-die. The paperboard laminated with the polyethylene film was folded to yield an antibacterial member-1 of a rectangular parallelepiped shape with a capacity of 300 mL. The paperboard was so formed that the polyethylene film was located on a side which will come in contact with a content, in order to prevent the content from coming in direct contact with the base member.

### (Example 3)

### <Preparation of antibacterial member-2 - Base member is foamed polystyrene>

A polyethylene film with a thickness of 4 µm was bonded to a plate of polypropylene with a thickness of 0.4 mm using an urethane adhesive containing the inorganic antibacterial agent A-1. When bonding was performed, surfaces of the plate of polypropylene and the polyethylene film were both subjected to activation by corona discharge treatment to facilitate adhesion of the adhesive. The plate of polypropylene bonded with the polyethylene film was formed into a lunch box by a common shaping method. The lunch box was so formed that a side which will come in contact with a content of the lunch box was covered with the polyethylene film, in order to prevent the content from coming in direct contact with the inorganic antibacterial agent. Note that contained amount of the inorganic antibacterial agent was 0.4 g/m² with respect to an inner surface area of the lunch box.

### (Example 4)

### <Preparation of antibacterial member-3>

A piece of paperboard having a basis weight of 200 g/m² was impregnated with an aqueous dispersion Y-1 containing the inorganic antibacterial agent A-1 to yield paperboard containing A-1 at 0.2 g/m². Both surfaces of the paperboard (3 cm square) were laminated with a polyethylene film with a thickness of 4 µm by the extrusion lamination method using a T-die. The member was so prepared that all periphery of the paperboard was laminated with the polyethylene film.

### (Example 5)

### <Antibacterial product - Method of testing antibacterial property>

Antibacterial property was evaluated by a testing method conforming to JISZ2801. Evaluation was made by substituting the test bacteria of JISZ2801 (Antibacterial product - testing method of antibacterial property · antibacterial effect) with Escherichia coli, the test result of which is shown in the table below.

Note that in the testing method for antibacterial property of JISZ2801 (:2006), testing operations of preincubation of test bacteria, preparation of a test piece, cleanup of the test piece, preparation of test bacteria liquid, inoculation of the test bacteria liquid, incubation of the test piece inoculated with the test bacteria liquid, washing out of the incubated test bacteria, and measurement of a count of viable bacteria by the agar plate culturing method were performed in this order, thereafter, a number of viable bacteria was determined from the count of colonies according to the equation of N = C × D × V (in the equation, N denotes a number of viable bacteria (per test piece), C denotes a count of colonies (average of counts of colonies of two dishes employed), D denotes dilution (dilution of diluted liquid dispensed in the dishes employed), and V denotes an amount of liquid (mL) of SCDLP culture media used for washing out). The test pieces were each a 3 cm square having been cut out.

### (Example 6) (Test of antibacterial property)

The paperboard (Sample H1-1) laminated with the antibacterial member-1 described in Example 2 and laminated paperboard (Sample C-1), which was prepared similarly to Sample H1-1 except that no inorganic antibacterial agent was used, were each cut into a 3 cm square and inoculated with liquid containing Escherichia coli on the side to which a content comes in contact (the side where a polyethylene film was laminated, namely inside of the container), thereafter, stored with a wrap in a desiccator containing water at 27 ºC for 24 hours, and then, a count of viable bacteria was measured.

The antibacterial member-2 (Sample H2-1) described in Example 3 and a foamed polystyrene plate (Sample C2-1) laminated with a polyethylene film, which was prepared similarly to Sample H2-1 except that no inorganic antibacterial agent was used, were each cut into a 3 cm square and inoculated with liquid containing Escherichia coli on the side to which a content comes in contact (the side where a polyethylene film was laminated, namely inside of the container), thereafter, stored with a wrap in a desiccator containing water at 27 ºC for 24 hours, and then, a count of viable bacteria was measured.

The antibacterial member-3 (Sample H3-1) described in Example 4 and paperboard (Sample C3-1) laminated with a polyethylene film on all surfaces, which was prepared similarly to Sample H3-1 except that no inorganic antibacterial agent was used, were each inoculated with liquid containing Escherichia coli on one surface, thereafter, stored with a wrap in a desiccator containing water at 27 ºC for 24 hours, and then, a count of viable bacteria was measured.

**Results of test**

| Sample | Number of initial bacteria | Number of control bacteria | Number of bacteria after 24 hours | |
|---|---|---|---|---|
| H1-1 | 5.2×10⁴ | 2.7×10⁴ | 10 or less | present invention |
| C1-1 | 5.1×10⁴ | 2.8×10⁴ | 3.0×10⁴ | comparative example |
| H2-1 | 5.3×10⁴ | 3.0×10⁴ | 10 or less | present invention |
| C2-1 | 4.9×10⁴ | 2.7×10⁴ | 2.9×10⁴ | comparative example |
| H3-1 | 5.1×10⁴ | 3.0×10⁴ | 10 or less | present invention |
| C3-1 | 4.8×10⁴ | 2.7×10⁴ | 2.8×10⁴ | comparative example |

Samples H1-1, H2-1 and H3-1, which were the antibacterial members of the present invention, showed smaller numbers of bacteria after 24 hours compared with comparative examples C1-1, C2-1 and C3-1, meaning that they had better antibacterial property and were desirable.

## Claims

1. An antibacterial member composed of at least one base member and at least one plastic film fixed to said base member, wherein
at least one inorganic antibacterial agent is contained in said base member and/or at least one of compositions disposed between said base member and said plastic film,
no inorganic antibacterial agent is contained in said plastic film, said base member and said composition in which the inorganic antibacterial agent is contained do not come in direct contact with a content, and
a film thickness of said plastic film is 4 to 10 µm.

2. An antibacterial member of claim 1, wherein said inorganic antibacterial agent is an oxide or an hydroxide which contains Zn ion (component 1) and at least one of ions of an alkaline earth metal, aluminum and silicon (component 2).

3. An antibacterial member of claim 1, wherein said base member is made of paper or plastic.

4. An antibacterial member of claim 1, wherein said plastic film is made of polyethylene or polypropylene.

5. An antibacterial member of claim 1, wherein said inorganic antibacterial agent is a solid solution represented by the following formula (1) :
(ZnO)ₓ(Al₂O₃)₁₋ₓ ··· (1)
wherein x fulfills the condition of 0.5 < x < 0.98.
